# FASCICULE DE BREVET EUROPEEN

(11) **EP 1 400 408 B1**
(45) Date de publication et mention de la délivrance du brevet: **18.01.2006**
(21) Numéro de dépôt: 03292273.4
(22) Date de dépôt: 15.09.2003
(51) Int. Cl.: B60Q 1/04

(54) **Projecteur de véhicule automobile comportant des moyens perfectionnés de liaison au châssis du véhicule**
Kraftfahrzeugscheinwerfer mit verbesserten Verbindungsmitteln zum Fahrgestell
Headlamp for motor vehicle with improved connection means to vehicle chassis

(30) Priorité: 20.09.2002 FR 0211708
(43) Date de publication de la demande: 24.03.2004
(73) Titulaire: VALEO VISION, 93012 Bobigny Cédex (FR)
(72) Inventeur: Arlon, Philippe, 93012 Bobigny Cédex (FR); Harand, Pascal, 78321 La Verriere Cédex (FR); Marechal, Laurence, 78231 La Verriere Cédex (FR); Boumaza, François, 78231 La Verriere Cédex (FR)
(74) Mandataire: Renous Chan, Véronique

(56) Documents cités:
- EP-A- 0 620 137
- EP-A- 1 059 200
- EP-A- 1 127 739
- FR-A- 2 781 736
- FR-A- 2 789 028
- US-A- 4 996 634

## Description

La présente invention concerne un projecteur de véhicule automobile, qui comporte un boîtier renfermant au moins une source lumineuse et fixé à un châssis.

On sait que les projecteurs, par leur localisation, jouent un grand rôle dans la sécurité passive des véhicules, car il est fréquent que lors d'un accident dans lequel est impliqué un piéton, ce dernier vienne heurter l'un des projecteurs du véhicule.

Dans le cas d'un piéton adulte de taille moyenne, la partie du corps venant directement au contact du projecteur est la hanche, ce qui peut avoir des conséquences graves sur le fonctionnement des membres inférieurs.

Dans le cas d'un enfant, c'est sa tête qui vient heurter le projecteur. II est inutile de détailler les conséquences qui peuvent s'ensuivre.

Conscients de ces problèmes, les constructeurs ont, depuis un certain temps déjà, proposé des solutions visant à réduire les lésions subies par les piétons en cas de choc avec un projecteur.

L'on pourra notamment se référer au brevet français N° FR-2 501 334, ou à son équivalent américain N° US-4,475,148.

L'on pourra également se référer à la demande de brevet allemand publiée sous le numéro DE-100 30 373.

II esr également connu les documents FR 2 789 028, FR 2 781 736, EP 1 059 200, EP 0 620 137 et EP 1 127 739 qui concement tous différents façons d'adapter la conception du projecteur lui-même ou des moyens de liaison mécanique du projecteur au véhicule dans lequel il est monté, afin d'absorber l'énergie dégagée lors d'un choc, notamment par une rupture mécanique localisée au niveu du boîtier, de la glace ou de la liaison avec le chassis.

Un projecteur selon le préambule de la revendication 1 est connu de FR2781736.

Les solutions décrites par ces documents proposent d'interposer, entre le projecteur et la structure du véhicules, des moyens élastiques pour absorber une partie de l'énergie du choc.

Ces solutions ont pu connaître un certain succès commercial, mais elles présentent malgré tout un certain nombre d'inconvénients.

D'une part, la sécurité qu'elles garantissent au piéton est perfectible, notamment au regard des nouveaux standards en matière de sécurité passive, définis par des organismes tels que l'EEVC (European Enhanced Vehicle-Safety Committee) ou l'Euro NCAP (European New Car Assessment Programme).

II faut reconnaître que ces standards, dont on peut prendre connaissance directement auprès de ces organismes, sont extrêmement exigeants.

D'autre part, les solutions connues sont assez complexes et impliquent, pour la plupart, de réviser profondément la conception générale du projecteur, ce qui requiert des moyens humains, techniques et financiers relativement importants, et entraîne des délais de mise au point souvent incompatibles avec les exigences des constructeurs automobiles.

En outre, les projecteurs connus sont d'un encombrement assez important, ce qui peut s'avérer incompatible avec la place disponible sous le capot des véhicules compacts qui représentent l'essentiel des parts de marché.

L'invention vise notamment à pallier les inconvénients précités des projecteurs connus et à satisfaire aux nouveaux standards de sécurité passive, en proposant un projecteur qui soit à la fois compact et de conception relativement simple et qui, tout en répondant aux exigences habituelles en termes d'éclairage et d'esthétique, améliore la sécurité des piétons en cas de choc.

A cet effet, l'invention propose un projecteur de véhicule automobile tel que défini dans la revendication 1.

On entend par projecteur au sens de l'invention, de façon plus générale, tout dispositif d'éclairage/signalisation pour véhicule.

De la sorte, il n'est pas nécessaire de réviser profondément la structure du projecteur, ce qui permet de réaliser de substantielles économies.

Par ailleurs, un tel projecteur est d'un encombrement équivalent à celui d'un projecteur classique dépourvu de moyens d'absorption d'énergie.

Il est possible d'optimiser l'absorption d'énergie en munissant les moyens de liaison d'au moins une zone de rupture prédéterminée ou, de préférence, d'une succession de zones de rupture prédéterminées susceptibles de rompre successivement lors d'un choc subi par le projecteur, lesdites zones étant notamment adjacentes les unes aux autres.

De préférence, les éléments frangibles vont être aptes à absorber l'essentiel de l'énergie générée par le choc.

Selon l'invention, les moyens de liaison peuvent comporter un organe de fixation susceptible de se déchirer sous l'effet d'un choc subi par le projecteur.

Cet organe de fixation comporte par exemple deux parties fixées respectivement au boîtier au châssis, les parties étant raccordées par une série de ponts frangibles susceptibles de rompre sous l'effet d'une traction exercée sur l'une des parties.

Suivant un mode de réalisation, les deux parties sont raccordées par deux séries parallèles de ponts frangibles.

De plus, le boîtier peut comporter des moyens de guidage de son propre déplacement par rapport au châssis lors de la rupture des ponts frangibles. Ces moyens de guidage forment par exemple une liaison pivot entre le boîtier et le châssis.

L'invention sera mieux comprise à la lecture de la description qui va suivre, donnée uniquement à titre d'exemple et faite en se référant aux dessins annexés dans lesquels :
- la figure 1 est une vue schématique d'élévation en coupe d'un projecteur de véhicule automobile, muni de moyens frangibles de liaison de son boîtier au châssis du véhicule, suivant un premier mode de réalisation où ces moyens comportent une entretoise munie d'une série de collerettes susceptibles de rompre successivement sous l'effet d'un choc subi par le projecteur ;
- la figure 2 est une vue de détail d'élévation en coupe illustrant partiellement le projecteur de la figure 1, avec l'entretoise - encore intacte - interposée entre le boîtier du projecteur et le châssis ;
- la figure 3 est une vue analogue à la figure 2, représentant le projecteur au cours d'un choc, le boîtier venant rompre successivement des collerettes de l'entretoise ;
- la figure 4 est une vue en perspective, en coupe partielle, illustrant un projecteur muni de moyens frangibles de liaison à un châssis, suivant un deuxième mode de réalisation où ces moyens comportent une rangée de butées prolongée par une glissière dans laquelle est monté une patte mobile susceptible de venir rompre successivement les butées lors d'un choc subi par le projecteur ;
- la figure 5 est une vue partielle d'élévation en coupe du projecteur de la figure 4, suivant le plan de coupe V-V ;
- la figure 6 est une vue analogue à la figure 5, illustrant le projecteur au cours d'un choc fextrêmité de la patte mobile en cas de choc et venant rompre successivement les butées ;
- la figure 7 est une vue en perspective, en coupe partielle, illustrant un projecteur selon la présente invention, muni de moyens frangibles de liaison du boîtier du projecteur à un châssis, suivant un troisième mode de réalisation où ces moyens comportent un organe de fixation déchirable ;
- la figure 8 est une vue d'élévation en coupe du projecteur de la figure 7 ;
- la figure 9 est une vue analogue à la figure 8, illustrant le projecteur au cours d'un choc provoquant le déchirement de l'organe de fixation du boîtier au châssis ;
- la figure 10 est une vue en perspective illustrant un projecteur monté sur le châssis du véhicule par l'intermédiaire d'un organe fonctionnel, suivant un troisième mode de réalisation
- Les figures 14 à 17 sont des vues d'une variante selon l'invention : la figure 14 est une vue d'une patte de fixation frangible déchirable, la figure 15 est une vue d'une autre patte frangible déchirable, la figure 16 étant une vue d'une patte déchirable du boîtier, une fois le test de traction excercée sur la patte, la figure 17 est un graphe de résultats des essais 1 à 3 menés sur des boîtiers de projecteur équipés de pattes déchirables selon la figure 7 (essai n°2), la figure 15 (essai n°3) et avec un projecteur à pattes standard , exemple de référence (essai n° 1).

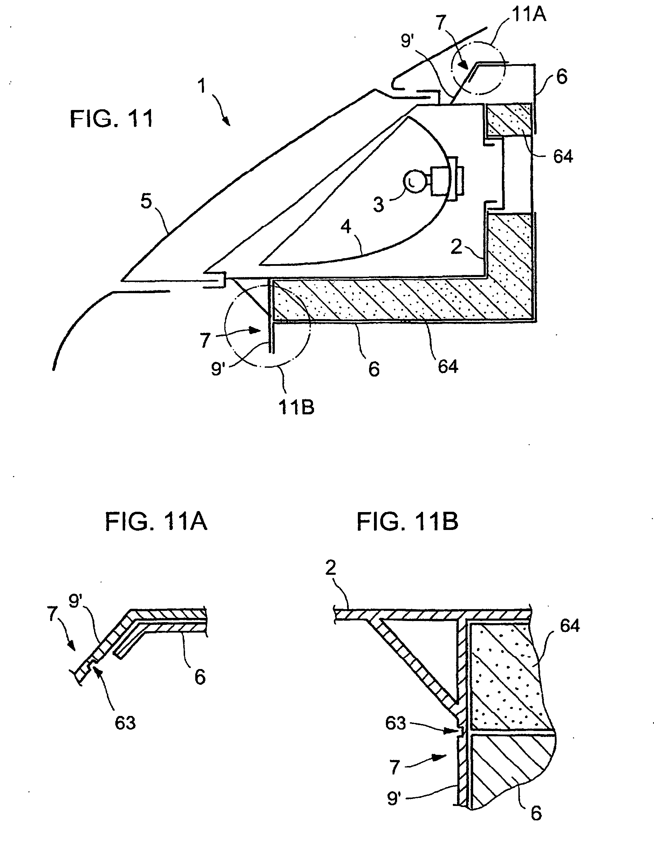

- Les figures 11 à 13 correspondent à trois variantes selon un quatrième mode de réalisation, utilisant également un matériau compressible.

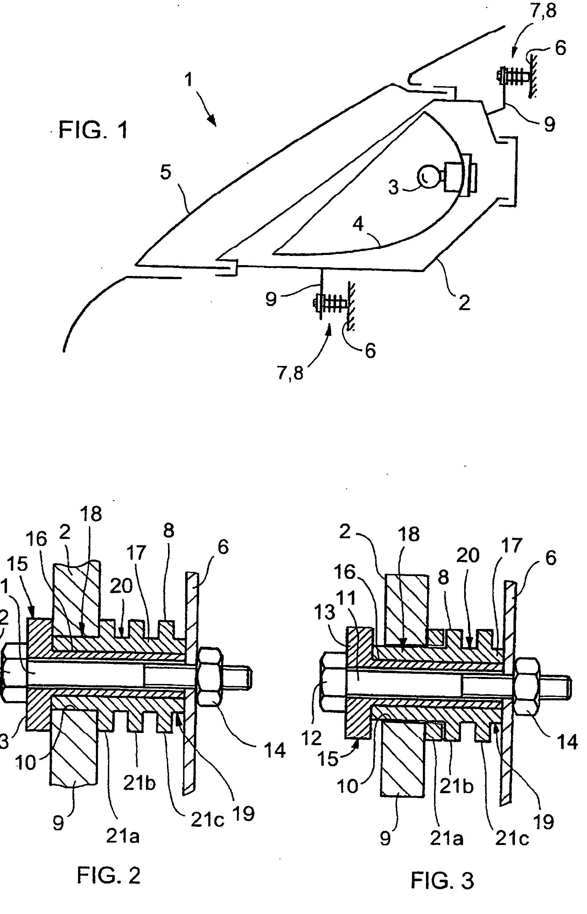

Les premier, deuxième, troisième et quatrième mode de réalisation selon les figures 1 à 6 et 11 à 13 ne font pas partie de la présente invention.

Sur la figure 1 est représenté un projecteur 1 de véhicule automobile. Ce projecteur 1 comporte un boîtier 2 renfermant un certain nombre de composants internes, parmi lesquels une source lumineuse 3 et un réflecteur 4 destiné à diffuser la lumière émise par la source 3.

Le projecteur 1 comporte en outre une glace 5 transparente, montée sur le boîtier 2 qu'elle vient refermer à la manière d'un couvercle pour protéger les composants internes 3, 4 tout en transmettant la lumière émise par la source 3.

Le boîtier 2 est fixé sur un châssis 6 intégré au châssis du véhicule. Lors d'un choc frontal avec un obstacle, tel qu'un piéton, celui-ci vient heurter la glace 5 en enfonçant le projecteur 1.

Afin notamment de limiter les lésions subies par le piéton, le projecteur 1 comporte des moyens propres à absorber au moins une partie de l'énergie du choc, constitués par des moyens frangibles 7 de liaison du boîtier 2 au châssis 6. Comme nous le verrons ci-après, ces moyens de liaison 7 comportent au moins une zone de rupture prédéterminée.

Plusieurs modes de réalisation peuvent être choisis pour les moyens de liaison 7. Suivant un premier mode de réalisation, illustré sur les figures 1 à 3, les moyens de liaison 7 comportent une entretoise 8 (sous forme approximativement annulaire) interposée entre le boîtier 2 et le châssis 6.

Plus précisément, le boîtier 2 est muni de pattes 9 en saillie par lesquelles il est fixé au châssis 6. Chaque patte 9 est percée d'un trou 10 dans lequel est introduit une vis 11 dont la tête 12 prend appui sur la patte 9 par l'intermédiaire d'une rondelle 13 jouant un rôle d'entretoise, la vis 11 venant par ailleurs en prise avec une paroi mince du châssis 6, un écrou 14 étant vissé sur la vis de l'autre côté de la paroi du châssis 6 pour maintenir l'ensemble serré.
Comme il apparaît sur les figures 2 et 3, la rondelle 13 est formée par la collerette d'une pièce 15 de révolution à section en forme de T qui, pour consolider l'assemblage, comporte un fourreau 16 cylindrique dans lequel est introduit le corps de vis et sur lequel est emmanchée l'entretoise 8.

Celle-ci comporte un fût 17 présentant une première portion cylindrique d'extrémité 18 par laquelle le fût 17 est introduit dans le trou 10 de la patte 9, et une deuxième portion cylindrique d'extrémité 19, opposée, par laquelle le fût 17 est en appui contre le châssis 6.

Le fût 17 présente en outre, entre ses portions d'extrémité 18 et 19, une portion intermédiaire 20 dont saillent radialement une série d'anneaux circulaires ou collerettes 21 a, 21b, 21c régulièrement espacées.

Le nombre de collerettes 21a, 21b, 21c, ici choisi égal à trois, est de préférence compris entre 2 et 5. Toutetois, une collerette unique pourrait éventuellement suffire, pour des chocs de faible amplitude.

Comme cela apparaît sur la figure 2, la collerette 21a qui jouxte la première portion d'extrémité 18 est plaquée contre la patte 9 qui se trouve ainsi serrée entre la rondelle 13 et la collerette 21a lorsque le montage est réalisé.

Ainsi, tant que le projecteur 1 ne subit aucun choc, le boîtier 2 se trouve fixé rigidement au châssis 6 en étant maintenu par l'entretoise 8 à une distance constante de celui-ci.

Cet écart est maintenu constant tant que la force exercée sur la collerette 21a par le boîtier 2 ne dépasse par une valeur seuil prédéterminée, qui dépend de l'épaisseur de la collerette 21a et de la nature du matériau choisi pour l'entretoise 8, qui est ici réalisée dans un matériau métallique tel qu'un acier.

A titre indicatif, la longueur de la portion intermédiaire 20 à collerettes 21A, 21B, 21C est comprise entre 20 mm et 150 mm, de préférence entre 20 mm et 50 mm. Defaçon plus générale, cette indication de longueur peut s'appliquer à la succession d'éléments frangibles de l'ensemble des modes de réalisation décrits dans le présent texte.

Lorsqu'au cours d'un choc subi par le projecteur 1 la force exercée par le boîtier 2 sur la collerette 21a dépasse cette valeur seuil, l'appui de la patte 9 contre la collerette 21a entraîne, à la jonction de celle-ci et du fût 17, l'apparition d'une contrainte de cisaillement qui provoque l'arrachement de la collerette 21a (Cf. figure 3) dont la rupture absorbe une partie au moins de l'énergie du choc.

Si l'énergie résiduelle est suffisante, cette situation se reproduit avec la collerette 21b suivante, contre laquelle vient buter la collerette 21a qui vient de rompre et qui est entraînée par le boîtier 2 en direction du châssis 6, de sorte qu'une partie au moins de l'énergie résiduelle est encore absorbée.

La rupture successive des collerettes 21a, 21b, 21c se produit, sous l'appui du boîtier 2, jusqu'à ce que la totalité de l'énergie du choc ait été absorbée, ou bien jusqu'à ce que les collerettes 21a, 21b, 21c aient toutes rompu.

Ainsi, en cas de choc, le projecteur 1 recule de manière discrète, c'est-à-dire par à-coups, vers le châssis 6.

Pour accroître les capacités d'absorption d'énergie de l'entretoise 8, il suffit d'augmenter le nombre de collerettes 21a, 21b, 21c. Toutefois, la multiplication des collerettes entraîne un allongement de l'entretoise 8, et donc un affaiblissement de la tenue du boîtier 2 sur le châssis 6. En l'occurrence, on a choisi une entretoise 8 métallique à trois collerettes 21a, 21b, 21c qui, tout en présentant une grande capacité d'absorption d'énergie, assure également une tenue suffisamment rigide du boîtier 2 sur le châssis 6.

Bien entendu, la résistance de la paroi mince (tôle) du châssis 6 est bien supérieure à celle des collerettes 21A, 21B, 21C, de sorte que lors de la rupture de ces dernières, le châssis 6 reste intact. Il est ainsi préférable que la tôle soit suffisamment rigide pour que les efforts de rupture des éléments frangibles selon ce mode de réalisation(ainsi que des autres modes de réalisation décrits dans le présent texte) restent nettement inférieurs à celui de la tôle : on évite ainsi que la tôle ne se déforme avant que ces éléments frangibles ne rompent. La tôle pourra être rigidifiée au besoin, notamment par des nervures. II s'agit donc d'un renforcement mécanique localisé.

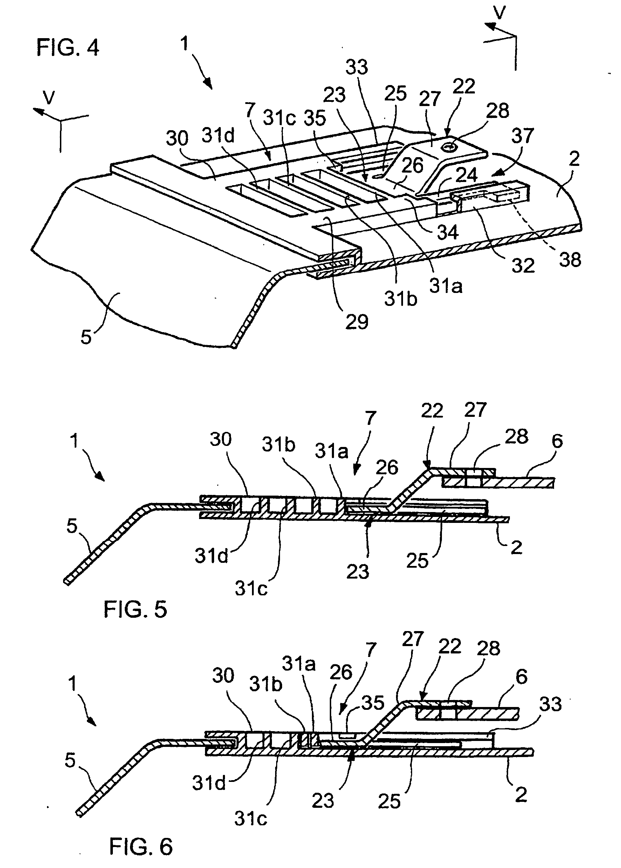

Suivant un deuxième mode de réalisation, illustré sur les figures 4 à 6, le projecteur 1 comporte au moins une, et par exemple deux pattes 22 rapportée pour la fixation du boîtier 2 au châssis 6, réalisées par découpe et pliage d'une tôle métallique.

La ou chaque patte de fixation 22 comporte, d'une part, une partie de base 23 par laquelle elle est montée sur le boîtier 2. Cette base 23 comporte deux branches 24, 25 parallèles réunies par une âme 26 qui leur est perpendiculaire, en sorte que la base 23 présente un profil en forme de U.

La patte de fixation 22 comporte, d'autre part, une extrêmité de patte 27 qui, étendue entre les branches 24, 25, se raccorde à l'âme 26 et est coudée pour faire saillie par rapport à la base 23, en sorte que la patte de fixation 22 présente en section une forme de h.

La patte 27 est fixée au châssis 6 au moyen d'une vis de fixation qui, traversant un trou 28 ménagé dans la patte 27, vient en prise avec le châssis 6.

Le boîtier 2 comporte par ailleurs deux nervures longitudinales 29, 30 en saillie, reliées par une rangée de cloisons 31a, 31b, 31c, 31d parallèles qui s'étendent transversalement à intervalles réguliers. Les nervures 29, 30 sont prolongées, au-delà des cloisons 31a à 31d, par deux rails 32, 33 parallèles à section en forme de L renversé, comme cela est visible sur la figure 4 où l'un des rails 32 est représenté en arraché partiel.

A la jonction des rails 32, 33 et des nervures 29, 30 sont prévus deux décrochements 34, 35 formant des griffes dont la fonction apparaîtra dans ce qui va suivre.

Les rails 32, 33 forment conjointement une glissière 36 dans laquelle est introduite longitudinalement la patte de fixation 22.

La glissière 36 définit, conjointement avec la cloison 31a d'extrémité, c'est-à-dire la cloison 31a jouxtant les rails 32, 33, un logement 37 dans lequel est reçue la patte 22, dont les branches 24, 25 sont munies chacune, à leur extrémité opposée à l'âme 26, d'un ergot 38 faisant saillie latéralement, propre à coopérer à coulissement avec un rail 32, 33, la tenue de la patte 22 sur le boîtier 2 étant complétée par les griffes 34, 35 qui coopèrent à coulissement avec les branches 24, 25.

Tant que le projecteur 1 ne subit aucun choc, la patte 22 demeure, sensiblement immobile, dans son logement 37, avec l'âme 26 appliquée contre la cloison d'extrémité 31a qui forme ainsi une butée de retenue de la patte 22.

Cette situation persiste tant que la patte 22 n'exerce par sur la cloison d'extrémité 31a une force d'appui supérieure à une valeur seuil prédéterminée, qui dépend de l'épaisseur de la cloison 31a.

Lors d'un choc subi par le projecteur 1, le boîtier 2 recule sous la pression exercée par l'obstacle tandis que la patte 22, assujettie au châssis 6, tend à conserver sa position.

Si au cours du choc la force exercée par la patte 22 sur la cloison 31a - en réaction à la force de compression exercée par le boîtier 2 - dépasse la valeur seuil prédéterminée, l'âme 26 en appui contre la cloison 31a provoque son arrachement, cette rupture absorbant une partie au moins de l'énergie du choc.

Si l'énergie résiduelle est suffisante, cette situation se reproduit successivement avec la ou les cloisons 31b, 31c, 31d suivantes, contre lesquelles vient buter la patte 22, jusqu'à ce que la totalité de l'énergie du choc ait été absorbée, ou bien jusqu'à ce que l'ensemble des cloisons 31 a, 31 b, 31 c, 31 d aient rompu.

Ainsi, la patte 22, mobile au cours du choc, coulisse dans la glissière 36, par rapport au boîtier 2, de manière discrète, c'est-à-dire par à-coups. Autrement dit, le boîtier 2 recule de manière discrète par rapport au châssis 6.

De la même manière que pour le premier mode de réalisation décrit ci-dessus, il est possible de réguler les capacités d'absorption d'énergie des moyens de liaison 7 en faisant varier le nombre de cloisons 31a, 31b, 31c, 31d.

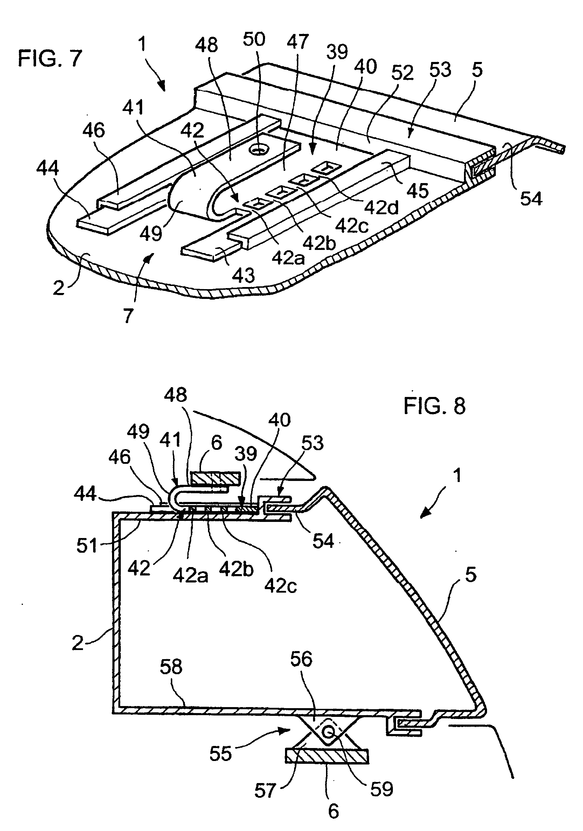

Selon l'invention, illustré sur les figures 7 à 9 et 14 à 17, les moyens de liaison 7 comportent au moins un, et par exemple deux organes de fixation 39 susceptibles de se déchirer sous l'effet d'un choc subi par le projecteur 1.

Le ou chaque organe de fixation 39, qui se présente sous la forme d'une patte monobloc réalisée par découpe et pliage d'une tôle métallique, comporte une partie de base 40 fixée au boîtier 2, ainsi qu'une patte 41 de fixation au châssis 2, patte 41 qui se raccorde à la base 40 par une série 42 de ponts frangibles susceptibles de rompre sous l'effet d'une traction exercée par la base 40 ou par la patte 41.

Comme on peut le voir sur la figure 7, la base 40, sensiblement plate, comporte deux ailes longitudinales parallèles 43, 44 qui, pour assurer le maintien de la pièce de fixation 39 sur le boîtier, coopèrent respectivement avec deux rails 45, 46 parallèles en saillie sur le boîtier 2, présentant chacun en section une forme de L renversé.

La patte 41 présente un profil en forme de U, et comporte deux branches 47, 48 sensiblement parallèles dont une première 47 s'étend longitudinalement dans le plan de la base 40 entre les ailes 43, 44 auxquelles elle se raccorde, de part et d'autre, par deux séries 42 parallèles de ponts frangibles 42a à 42d, et dont la deuxième 48 s'étend parallèlement et à l'aplomb de la première 47, à laquelle elle se raccorde par une âme 49 courbe qui saille du plan de la base 40 à l'opposé du boîtier 2.

Cette deuxième branche 48 est percée d'un trou 50 pour le passage d'une vis qui vient se prendre dans le châssis 6 pour assurer la fixation de la patte 22 à ce dernier.

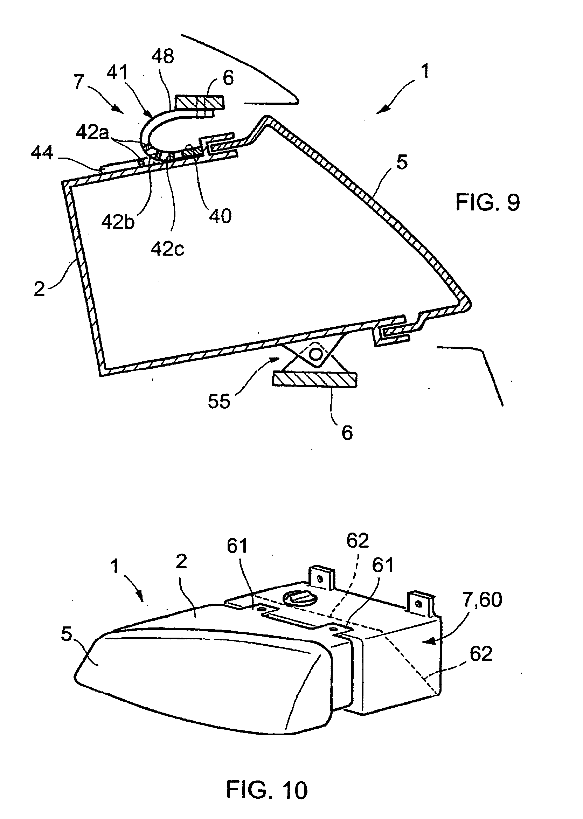

Comme cela est visible sur les figures 8 et 9, la pièce de fixation 39 est montée sur une paroi supérieure 51 du boîtier 2, la base 40 étant reçue entre les rails 45, 46 et venant buter contre une surface d'arrêt 52 transversale formée par un bord avant 53 du boîtier 2, conformé pour recevoir à emboîtement une jupe 54 dont est pourvue la glace 5.

Comme cela est également visible sur les figures 8 et 9, le boîtier 2 est monté articulé sur le châssis 6, du côté opposé à la pièce de fixation 39, au moyen d'une liaison pivot 55 formée par deux nervures 56, 57 dont l'une 56 est prévue en saillie sur une paroi nférieure 58 du boîtier 2 et l'autre 57 en saillie sur le châssis 6, ces nervures 56, 57 coopérant mutuellement à rotation au moyen d'un axe transversal 59 qui les traverse conjointement.

Tant que le projecteur 1 ne subit aucun choc, la pièce de fixation 39 conserve son ntégrité en assurant un maintien rigide du boîtier 2 sur le châssis 6.

Cette situation persiste tant que la force de traction exercée sur les ponts frangibles 42a à 42d par la patte 41 et la base 40, qui tendent à s'éloigner l'une de l'autre, ne dépasse pas une valeur seuil prédéterminée, qui dépend de la section des ponts frangibles 42a à 42d.

Lors d'un choc subi par le projecteur 1, le boîtier 2 recule sous la pression exercée par l'obstacle, en tendant à pivoter autour de son axe 59 d'articulation. Et, tandis que la base 40 accompagne le boîtier 2 au cours de son mouvement, la patte 41 reste attachée au châssis 6.

Les premiers ponts frangibles 42a rompent dès lors qu'au cours du choc la force de traction exercée sur eux dépasse la valeur seuil prédéterminée, cette rupture absorbant une partie au moins de l'énergie du choc (figure 9).

Si l'énergie résiduelle est suffisante, cette situation se reproduit successivement avec les ponts frangibles 42b à 42d, la patte 41 se détachant progressivement de la base 40, jusqu'à ce que la totalité de l'énergie du choc ait été absorbée, ou bien jusqu'à ce que l'ensemble des ponts frangibles 42a à 42d aient rompu.

Ici encore, le recul du projecteur 1 par rapport au châssis 6 s'effectue de manière discrète.

Le guidage précis du boîtier 2 par rapport au châssis 6, au moyen de la liaison pivot 55, permet de répartir uniformément la force de traction exercée sur les deux séries parallèles 42 de ponts frangibles et assure ainsi une absorption optimale de l'énergie du choc.

De la même manière que pour les deux premiers modes de réalisation décrits ci-dessus, il est possible de réguler les capacités d'absorption d'énergie des moyens de liaison 7 en faisant varier le nombre de ponts frangibles 42a à 42d de l'organe de fixation 39.

Par ailleurs, afin que la pièce 39 assure pleinement sa fonction, on veillera à ce que l'effort de rupture du boîtier 2 au voisinage de la pièce 39 soit supérieur à l'effort de rupture de celle-ci. Par exemple, le boîtier 2 peut être renforcé dans la zone de fixation de la pièce 39 (par exemple par des nervures sur la paroi interne ou externe du boîtier, ou en utilisant ue glissière également rigidifiée, égalementpar des nervures par exemple).

En outre, bien que, selon le mode de réalisation qui vient d'être décrit, le projecteur 1 soit monté pivotant autour d'un axe situé sous le projecteur 1, il est possible d'inverser la localisation des moyens de fixation 7 et de cet axe de rotation, de manière que le projecteur 1 pivote dans l'autre sens. Ces deux montages peuvent être choisis notamment en fonction de la hauteur du véhicule, afin d'amortir au mieux le choc, surtout lorsqu'il s'agit d'un choc piéton.

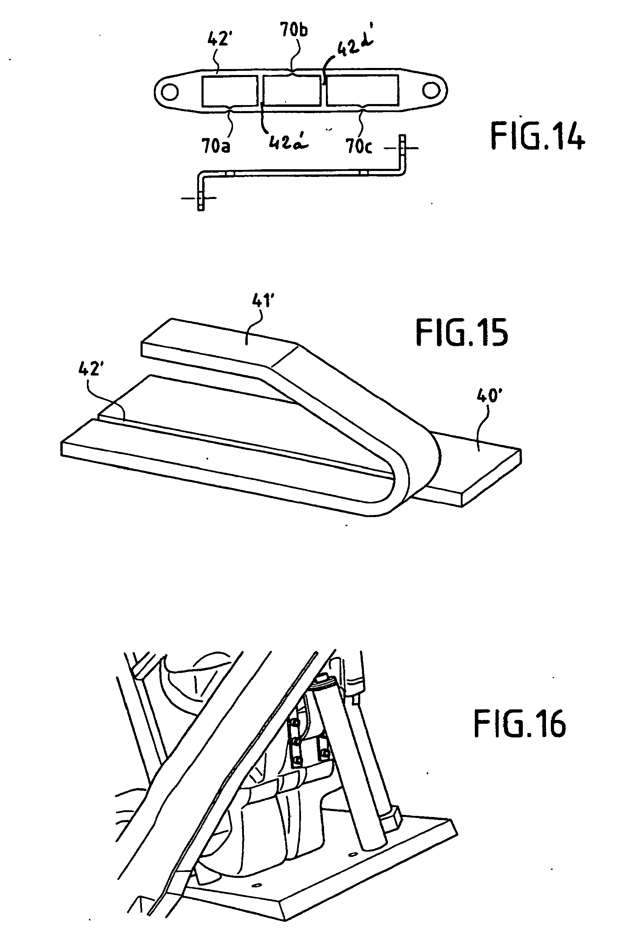

La figure 14 présente un mode de réalisation modifié de la patte de liaison déchirable telle que décrite à la figure 7: on a toujours une succession de ponts frangibtes 42a', 42d' mais la force de traction sur cette patte de fixation s'exerce sur l'une de ses extrêmités sans le mouvement de retour/ de déroutement d'une partie de la patte 41. Ces ponts frangibles comportent de préférence des zones 70a,b,c de moindre section : ce sont ces zones qui vont rompre les unes après les autres lors du choc sous l'effet de la traction execée par le mouvement de recul du boîtier par rapport au chassis. On a ainsi une patte déchirable comportant une bande de matériau avec de larges évidements dans sa partie médiane, ce qui crée deux séries parallèles de ponts frangibles. Les évidements peuvent avoir différentes formes géométriques, par exemple avoir une forme carrée, rectangulaire, circulaire, ovale. Ces formes variées peuvent aussi être utlisées dans les pattes telles que représentées à la figure 7.

La figure 15 présente un autre mode de réalisation modifié de la patte de liaison déchirable telle que décrite à la figure 7 : la figure, pour plus de simplicité, ne représente que la moitié de la patte déchirable, la patte entière comportant donc aussi une autre moitié de la partie 41' et une partie 40" symétrique de la partie 40' par rapport à la partie médiane 41'. Dans ce mode de réalisation, il n'y a plus de ponts frangibles rompant successivement, mais une déchirure progressive le long des deux entailles 42' (seule une entaille est représentée, puisque seule la moitié longitudinale de la patte est représentée). On comprend dans l'invention par « entaille » une diminution d'épaisseur du matériau localisée le long d'une ligne. La section de la patte, le long de cette ligne, présente donc, par exemple, une diminution d'épaisseur sous forme d'un V. On peut considérer que l'épaisseur dans la zone de l'entaille (mesurée à la pointe du V, c'est-à-dire là où l'épaisseur est la plus réduite), est environ 10 à 80 % de l'épaisseur de la patte, notamment entre 30 et 60 % de l'épaisseur de la patte. Bien sûr, on peut choisir une section d'entaille qui ne soit pas en V, mais qui soit, par exemple en U ou très arrondie, ou encore sous forme d'une rainure à fond plat.

Des tests ont été effectués avec un projecteur de véhicule de type Megane (constructeur Renault), utilisant des pattes déchirables précédemment décrites. Le but de ces mesures est de calculer un critère décrit dans le projet de directive européenne sur le choc piéton n° 70/156/EEC, critère désigné en anglais sous le terme de Head Impact Criteria ou HIC. Le mode de mesure est le suivant : on attache le projecteur sur un bâti fixe, qui simule le châsssis de la voiture. On utilise un impacteur, que l'on lance sur le projecteur d'un puit de chute vertical, le projecteur étant fixé sur le bâti selon un angle approprié défini dans la directive, pour que l'impacteur, quand il se trouve au contact du projecteur, le frappe selon un angle approprié. L'impacteur simule une tête d'enfant, c'est une sphère de 165 mm de diamière et de 3,5 kg, qui comprend un accéléromètre interne qui va relever les mesures de décélération. On peut en déduire une courbe d'effort et déterminer la valeur de HIC. Plus la valeur de HIC est faible, plus la protection pour le piéton est bonne.

### Essai n° 1

C'est l'essai témoin : on a fixé le projecteur sur le bâti avec des fixations standard, c'est-à-dire à l'aide de pattes de fixation vissées au bâti.

### Essai n° 2

C'est un essai selon l'invention : on a fixé le projecteur sur le bâti avec une patte de fixation comme représentée en figures 7,8 et 9. De très légères modifications ont été aportées à la patte de la figure 7 : les trous au niveau des ponts frangibles ne sont pas de section carrée, mais de section circulaire, l'extrémité de la partie 48 est prolongée par une paroi additionnelle perpendiculaire qui facilite l'attachement par vissage, les parties 43, 44 ne sont pas fixées à l'aide de rails mais par des vis réparties sur leurs longueurs. La patte est en inox, sa longueur est d'environ 45 mm, la largeur de chaque « rail » 44, 43 est d'environ 8 mm, la largeur de la partie médiane repliée 41 est d'environ 20 mm, et son rayon de courbure au niveau de la zone 49 est d'environ 5 mm. L'épaisseur de la patte est d'environ 1mm. La figure 16 est une photo représentant la patte selon cet essai après l'impact, la patte étant donc déchirée, tous les ponts frangibles ayant rompus les uns après les autres.

### Essai n° 3

C'est un essai selon l'invention : on a fixé le projecteur au bâti à l'aide d'une patte à entaille, par vissage, comme pour la patte selon l'essai n° 2 , la patte selon fessai n° 3 est conforme à la figure 15. Les dimensions des parties latérales et de la partie médiane sont similaires ou identiques à celle de la patte selon l'essai n° 2. L'entaille a une section en V et est d'une profondeur maximale de 0,5 mm, pour une épaisseur de patte de 1mm. La patte est en inox comme celle de l'essai n° 2

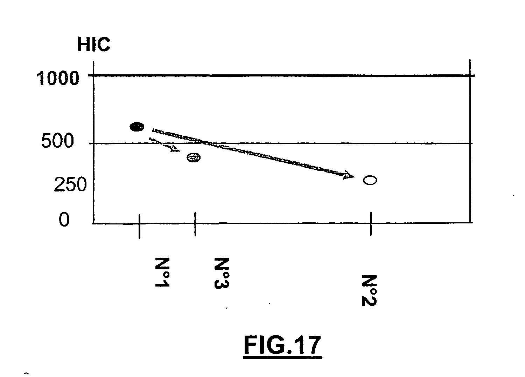

Les résultats des essais sont indiqués à la figure 17 : en ordonnée sont représentées les valeurs de HIC et en abscisse les n° des essais. On constate que les pattes déchirables selon l'invention permettent de diminuer du tiers et même de la moitié la valeur de HIC du projecteur témoin simplement vissé au bâti. En fait, la valeur de HIC « de départ « varie d'un projecteur à l'autre, car elle va dépender de la géométrie du projecteur et de sa position, de sa hauteur une fois monté à l'avant du véhicule. L'invention permet de la diminuer d'au moins 20 à 30 %, quelle que soit la valeur de HIC dont on part avec une fixation classique, et sans avoir à repenser la conception du projecteur, ce qui est très important sur le plan industriel. On peut utiliser cette solution également sur des véhicules en circulation, en deuxième monte, sans avoir à remplacer tout le projecteur.

II est à noter que toutes les pattes de liaison qui peuvent se rompre, se déchirer et qui ont été décrites plus haut peuvent être en matériau plastique ou en métal, par exemple en inox. Elles présentent le grand avantage de permettre d'amortir le choc pour le piéton en permettant au projecteur de reculer lors du choc, sans avoir à repenser entièrement la conception du projecteur. Et en cas de choc, il peut suffir de remplacer simplement cette patte, au lieu d'avoir à remplacer tout le projecteur. On peut utiliser une ou plusieurs pattes déchirables selon l'invention par projecteur. Une suffit généralement. Dans le cas, notamment , des pattes déchirables ayant fait l'objet des essais 2 et 3, il est possible de fixer la partie médiane sur le projecteur et parties « externes « de la patte dur le bati/ le chassis de la voiture également : on a trois points d'attache, deux sur le projecteur et un sur le bâti ou réciproquement.

Suivant un troisième mode de réalisation, illustré sur la figure 10, les moyens de liaison 7 du boîtier 2 au châssis 6 comportent un organe fonctionnel 60 du véhicule.Cet organe 60, sur lequel est monté le boîtier 2, remplit ainsi une fonction supplémentaire.

Cet organe 60 est par exemple un filtre à air ou un réservoir de liquide lave-glace, tel que représenté sur la figure 10. Un tel organe 60 a l'avantage de posséder par construction une bonne capacité à absorber l'énergie d'un choc en se déformant, puis en se brisant.

Le boîtier 2 du projecteur 1 est directement fixé à cet organe 60 par l'intermédiaire de pattes 61 en saillie, l'organe 39 étant à son tour fixé au châssis 6 du véhicule.

Comme cela est visible sur la figure 10, l'organe 39 peut être muni d'une ligne 62 de prédécoupe suivant laquelle il rompt de manière prédéterminée sous l'appui du boîtier 2 lorsque l'énergie du choc subi par le projecteur 1 est suffisante.

Suivant un quatrième mode de réalisation, dont trois variantes sont illustrées respectivement sur les figures 11, 12 et 13, les moyens de liaison 7 comportent des pattes de fixation 9' au moyen desquelles le projecteur 1 est directement monté sur le châssis 6, ces pattes 9' étant munies de zones de rupture prédéterminées 63.

Les pattes de fixation 9' se présentent en l'occurrence sous la forme de rainures pratiquées dans les pattes 9' et qui sont susceptible de rompre lors d'un choc frontal d'une intensité suffisante subi par le projecteur 1.

En rompant, les zones de rupture 63 absorbent une partie au moins de l'énergie du choc.

Bien entendu, il est possible de faire varier la section et/ou la profondeur des rainures 63 afin de régler en conséquence leurs capacités d'absorption de l'énergie du choc.

Lorsque le choc est d'une intensité supérieure aux capacités d'absorption des zones de rupture 63, il peut toutefois être nécessaire d'absorber au moins une partie de l'énergie résiduelle.

C'est pourquoi un organe compressible 64 est, en plus, interposé entre le boîtier 2 et le châssis 6. Il s'agit ici d'un bloc de mousse (en une ou plusieurs parties) qui recouvretout ou partie des faces du boîtier 2 qui se trouvent en regard du châssis 6, comme cela est représenté sur la figure 11. Dans cette variante là, il n'y a donc qu'une (faible) partie de l'énergie du choc qui est absorbée par les pattes de fixation frangibles, le reste de l'énergie étant absorbée par le ou les éléments compressibles.

L'organe compressible 64 est, de préférence, réalisé dans une mousse de polyuréthane. Des mousses de polyuréthane du type commercialisé par la société BAYER sous la marque BAYFILL® ou sous la référence PU 62 IF 70, d'une densité de 66 kg/m3 par exemple, ou par la société DOW sous la marque STRANDFOAM®, d'une densité de 44kg/m3 par exemple, peuvent convenir. On peut aussi utiliser des mousses métalliques (aluminium).

Ainsi, même lors d'un choc violent au cours duquel les pattes 9', ayant rompu, n'ont pu absorber la totalité de l'énergie du choc, l'organe 64 vient compléter cette absorption d'énergie en limitant notamment les dommages corporels subi par un piéton lorsque ce dernier est la victime du choc.

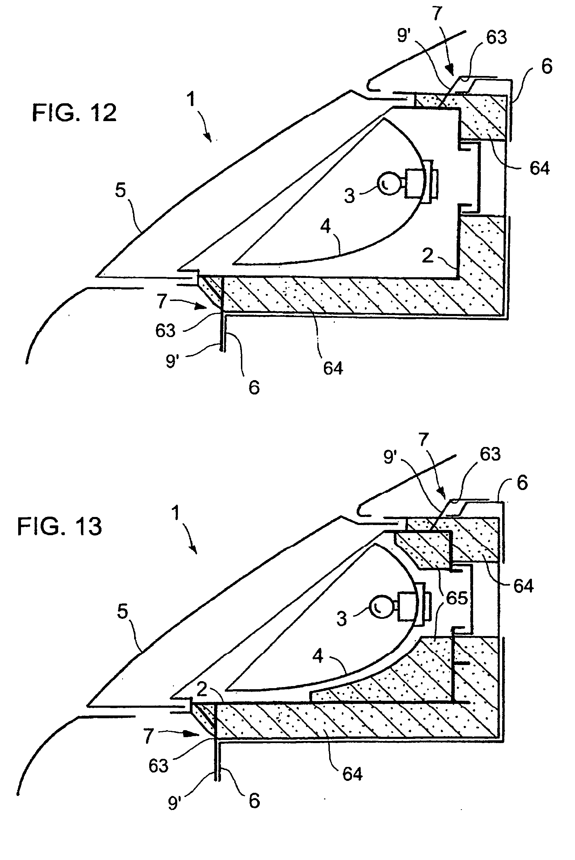

Conformément à la première variante, et comme cela est représenté sur la figure 11, l'organe compressible 64 peut être rapporté. Toutefois, conformément aux deuxième et troisième variantes, illustrées respectivement sur les figures 12 et 13, l'organe compressible 64 peut être surmoulé sur le boîtier 2.

Suivant la deuxième variante, les pattes de fixation 9' sont même noyées dans l'organe compressible 64, ce qui accroît leur rigidité au voisinage du boîtier 2 et permet de localiser la contrainte dans les zones de rupture 63.

Suivant la troisième variante, l'organe compressible 64 empiète même sur le volume interne du projecteur 1. Plus précisément, il présente une portion 65 qui s'étend entre le boîtier 2 et le réflecteur 4 (notamment contre la face arrière du boîtier et éventuellmeent tout ou partie de ses faces latérales). Ainsi, en cas de choc, l'organe compressible 64 amortit le recul du boîtier 2, mais, lorsque le choc est suffisamment violent ou suffisamment localisé pour provoquer l'enfoncement du réflecteur 4, l'organe compressible 64 amortit également le recul de ce demier.Ainsi, quel que soit le mode de réalisation choisi, l'agencement des moyens de liaison 7 assure une bonne capacité d'absorption de l'énergie d'un choc subi par le projecteur 1 tout en limitant l'encombrement de ce dernier, de sorte que les exigences de compacité des constructeurs de véhicules automobiles sont satisfaites.

On peut aussi n'introduire cet élément compressible sous forme de mousse qu'à l'intérieur du projecteur.

Par ailleurs, le projecteur 1 répond à des standards exigeants en matière de sécurité passive, au bénéfice de la sécurité des piétons dont les risques de lésions graves se trouve fortement amoindris, sans pour autant qu'il soit nécessaire de réviser profondément sa conception générale, les moyens de liaison décrits ci-dessus pouvant être aisément greffés sur un projecteur classique.

De plus, lorsque le choc subi par le projecteur 1 n'endommage que les moyens de liaison 7, les autres composants du projecteur 1 étant laissés intacts, il suffit de remplacer les moyens de liaison 7 sans qu'il soit nécessaire d'intervenir sur les autres composants, ce qui limite les interventions sur le projecteur 1 et réduit ainsi les coûts de réparation.

L'invention s'applique ainsi à tout véhicule équipé de tels projecteurs, qui soit apte à protéger au mieux les piétons en cas de choc, et notamment capable de remplir les conditions décrites dans le projet de directive européenne n° 70/156/EEC concernant le choc piéton.

## Revendications

1. Projecteur de véhicule automobile, qui comporte un boîtier (2) renfermant au moins une source lumineuse (3) et fixé sur un châssis (6), et comportant des moyens frangibles (7) de liaison du projecteur (1) du boîtier (2) au châssis (6) susceptibles d'absorber au cours de leur rupture au moins une partie de l'énergie d'un choc subi par le projecteur (1), **caractérisé en ce que** lesdits moyens de liaison (7) comportent un organe de fixation (39) susceptible de se déchirer sous l'effet d'un choc subi par le projecteur (1), cet organe de fixation (39) comprenant une série de zones adjacentes aptes à se déchirer successivement ou une zone apte à se déchirer progressivement lors d'un choc subi par le projecteur (1).

2. Projecteur selon la revendication précédente, **caractérisé en ce que** l'organe de fixation (39) comporte deux parties (40, 41) fixées respectivement au boîtier (2) et au châssis (6), les parties (40, 41) étant raccordées par au moins une série (42) de ponts frangibles (42a,a' à 42d,d') susceptibles de rompre sous l'effet d'une traction exercée sur l'une au moins des parties (40, 41).

3. Projecteur selon la revendication 2, **caractérisé en ce que** les deux parties sont raccordées par deux séries (42) parallèles de ponts frangibles (42a,a' à 42d,d').

4. Projecteur selon la revendication 1, **caractérisé en ce que** l'organe de fixation (39') comporte au moins deux parties (40', 41') fixées respectivement au boîtier (2) et au châssis (6), les parties (40', 41') étant délimitées par une entaille 42' sur tout ou partie de leur longueur, ladite entaille guidant la déchirure entre les deux parties (40', 41') sous l'effet d'une traction excercée sur l'une desdites parties.

5. Projecteur selon la revendication 4, **caractérisé en ce que** l'organe de fixation (39') comprend trois parties adjacentes (40', 40", 41'), la partie médiane 41' étant délimitée par rapport aux deux autres (40', 40") par une entaille (42', 42").

6. Projecteur selon l'une des revendications 2 à 5, **caractérisé en ce que** le boîtier (2) comporte des moyens de guidage (56, 57, 59) de son propre déplacement par rapport au châssis (6) lors de la rupture des ponts frangibles (42a,a' à 42d,d') ou de la déchirure le long de la ou des entailles (42').

7. Projecteur selon la revendication 6, **caractérisé en ce que** les moyens de guidage (56, 57, 59) forment une liaison pivot (55) entre le boîtier (2) et le châssis (6).

8. Projecteur selon l'une des revendications 2 ou 3, **caractérisé en ce que** les ponts frangibles (42a,a' à 42d,d') ont localement une moindre résistance mécanique par une diminution de leur section.

9. Projecteur selon l'une des revendications précédentes, **caractérisé en ce que** les éléments frangibles (7) n'absorbent qu'une partie de l'énergie du choc subi par le projecteur (1), et **en ce qu'**ils sont associés à au moins un élément compressible (64) du type mousse.

## Patentansprüche

1. Kraftfahrzeugscheinwerfer, der ein wenigstens eine Lichtquelle (3) umschließendes und an einer Karosserie (6) befestigtes Gehäuse (2) hat und zerbrechbare Mittel (7) des Scheinwerfers (1) zum Verbinden des Gehäuses (2) mit der Karosserie (6) umfasst, die bei ihrem Bruch wenigstens einen Teil der Energie eines auf den Scheinwerfer (1) ausgeübten Stoßes aufzunehmen vermögen,
**dadurch gekennzeichnet, dass** die Verbindungsmittel (7) ein Befestigungsorgan (39) aufweisen, das unter der Einwirkung eines auf den Scheinwerfer (1) ausgeübten Stoßes zu reißen vermag, wobei dieses Befestigungsorgan (39) eine Reihe von aneinander angrenzenden Bereichen, die nacheinander zu reißen vermögen, oder einen Bereich, der bei einem auf den Scheinwerfer (1) ausgeübten Stoß nach und nach reißt, aufweist.

2. Scheinwerfer nach dem vorhergehenden Anspruch ,
**dadurch gekennzeichnet, dass** das Befestigungsorgan (39) zwei Teile (40, 41) aufweist, die am Gehäuse (2) bzw. an der Karosserie (6) befestigt sind, wobei die Teile (40, 41) durch wenigstens eine Reihe (42) zerbrechbarer Brücken (42a,a' bis 42d,d') verbunden sind, die unter der Einwirkung eines Zugs, der auf wenigstens eines der Teile (40, 41) ausgeübt wird, zu brechen vermögen.

3. Scheinwerfer nach Anspruch 2,
**dadurch gekennzeichnet, dass** die zwei Teile durch zwei parallele Reihen (42) zerbrechbarer Brücken (42a, a' bis 42d,d') verbunden sind.

4. Scheinwerfer nach Anspruch 1,
**dadurch gekennzeichnet, dass** das Befestigungsorgan (39') wenigstens zwei Teile (40', 41') aufweist, die am Gehäuse (2) bzw. an der Karosserie (6) befestigt sind, wobei die Teile (40', 41') durch einen vollständig oder teilweise ihrer Länge nach verlaufenden Einschnitt (42') begrenzt sind, wobei der Einschnitt den Riss zwischen den beiden Teilen (40', 41') unter der Einwirkung eines Zugs, der auf eines der Teile ausgeübt wird, führt.

5. Scheinwerfer nach Anspruch 4,
**dadurch gekennzeichnet, dass** das Befestigungsorgan (39') drei aneinander angrenzende Teile (40', 40", 41') aufweist, wobei das mittlere Teil (41') bezüglich der beiden anderen Teile (40', 40") durch einen Einschnitt begrenzt ist.

6. Scheinwerfer nach einem der Ansprüche 2 bis 5,
**dadurch gekennzeichnet, dass** das Gehäuse (2) Mittel (56, 57, 59) zum Führen seiner eigenen Verlagerung in Bezug auf die Karosserie (6) beim Bruch der zerbrechbaren Brücken (42a,a' bis 42d,d') oder dem Riss entlang des oder der Einschnitte (42') aufweist.

7. Scheinwerfer nach Anspruch 6,
**dadurch gekennzeichnet, dass** die Führungsmittel (56, 57, 58) eine Drehverbindung (55) zwischen dem Gehäuse (2) und der Karosserie (6) bilden.

8. Scheinwerfer nach einem der Ansprüche 2 oder 3,
**dadurch gekennzeichnet, dass** die zerbrechbaren Brücken (42a,a' bis 42d,d') durch eine Verringerung ihres Querschnitts stellenweise eine geringere mechanische Widerstandsfähigkeit haben.

9. Scheinwerfer nach einem der vorhergehenden Ansprüche,
**dadurch gekennzeichnet, dass** die zerbrechbaren Teile (7) nur einen Teil der Energie des auf den Scheinwerfer (1) ausgeübten Stoßes aufnehmen und sie wenigstens einem komprimierbaren schaumartigen Element (64) zugeordnet sind.

## Claims

1. Motor vehicle headlight that comprises a casing (2) enclosing at least one light source (3) and fixed to a chassis (6) and comprising breakable means (7) for connecting the headlight (1) of the casing (2) to the chassis (6) able to absorb, during their breaking, at least part of the energy of an impact suffered by the headlight (1), **characterised in that** the said connection means (7) comprise a fixing member (39) able to tear under the effect of an impact suffered by the headlight (1), this fixing member (39) comprising a series of adjacent zones able to tear successively or a zone able to tear progressively during an impact suffered by the headlight (1).

2. Headlight according to the preceding claim, **characterised in that** the fixing member (39) comprises two parts (40, 41) fixed respectively to the casing (2) and to the chassis (6), the parts (40, 41) being connected by at least one series (42) of breakable bridges (42a,a' to 42d,d') able to break under the effect of a traction exerted on at least one of the parts (40, 41).

3. Headlight according to claim 2, **characterised in that** the two parts are connected by two parallel series (42) of breakable bridges (42a'a to 42d,d').

4. Headlight according to claim 1, **characterised in that** the fixing member (39') comprises at least two parts (40', 41') fixed respectively to the casing (2) and to the chassis (6), the parts (40', 41') being delimited by a recess (42) over all or part of their length, the said recess guiding a tear between the two parts (40', 41') under the effect of a traction exerted on one of the said parts.

5. Headlight according to claim 4, **characterised in that** the fixing member (39') comprises three adjacent parts (40'. 40", 41'), the middle part 41' being delimited with respect to the other two (40', 40") by a recess (42', 42").

6. Headlight according to one of claims 2 to 5, **characterised in that** the casing (2) comprises means (56, 57, 59) of guiding its own movement with respect to the chassis (6) at the time of rupture of the breakable bridges (42a,a' to 42d,d') or tearing along the recess or recesses (42').

7. Headlight according to claim 6, **characterised in that** the guidance means (56, 57, 59) form a pivot connection (55) between the casing (2) and the chassis (6).

8. Headlight according to one of claims 2 or 3, **characterised in that** the breakable bridges (42a,a' to 42d,d') have locally lesser mechanical strength through a reduction in their cross section.

9. Headlight according to one of the preceding claims, **characterised in that** the breakable elements (7) absorb only part of the energy of the impact suffered by the headlight (1) and **in that** they are associated with at least one compressible element (64) of the foam type.
